# EUROPÄISCHE PATENTSCHRIFT

(11) **EP 0 426 959 B1**
(45) Veröffentlichungstag und Bekanntmachung des Hinweises auf die Patenterteilung: **18.08.1993**
(21) Anmeldenummer: 90116300.6
(22) Anmeldetag: 25.08.1990
(51) Int. Cl.: B60T 7/20, B60T 13/66

(54) **Verfahren zur Abbremsung eines mit druckbetätigten Bremsen ausgerüsteten Fahrzeugzuges**
Braking method of a vehicle provided with pressure actuated brakes
Procédé de freinage d'un véhicule équipé de freins commandés par pression

(30) Priorität: 04.11.1989 DE 3936726
(43) Veröffentlichungstag der Anmeldung: 15.05.1991
(73) Patentinhaber: WABCO Vermögensverwaltungs-GmbH, D-30432 Hannover (DE)
(72) Erfinder: Friederichs, Otto, D-3008 Garbsen 1 (DE); Rothen, Johann, D-3203 Sarstadt (DE); Rosenthal, Hartmut, D-3000 Hannover 91 (DE)
(74) Vertreter: Schrödter, Manfred, Dipl.-Ing.

(56) Entgegenhaltungen:
- EP-A- 0 370 678
- DE-A- 3 502 051
- FR-A- 2 605 572
- US-A- 4 056 286

## Beschreibung

Die Erfindung betrifft Verfahren zur Abbremsung eines mit druckbetätigten Bremsen ausgerüsteten Fahrzeugzuges gemäß den Oberbegriffen der Patentansprüche 1 und 7 sowie Anordnungen zur Durchführung der Verfahren.

Ein derartiges Verfahren wird in Figur 1 der DE 35 02 051 A1 angewandt. Dort wird ein vom Fahrer in einen Bremswertgeber (dort Bremsventil 4) eingeleitetes Betätigungssignal in dem einen Einzelfahrzeug in Bremsdrücke zu jeweils einem Bremskreis umgesetzt. Einer dieser Bremsdrücke dient zugleich zur Bestimmung des Bremsdrucks in dem anderen Einzelfahrzeug. Aus Sicherheitsgründen wird der Bremsdruck in dem einen Einzelfahrzeug nicht direkt zur Bestimmung des Bremsdrucks in dem anderen Einzelfahrzeug herangezogen; vielmehr wird er in ein Mitbremssignal in Form eines Steuerdrucks umgesetzt und als solcher einem Anhängerbremsventil (dort 9) zugeführt. Ob die Bestimmung des Bremsdrucks in dem anderen Einzelfahrzeug durch das Mitbremssignal eine ausschließliche oder eine Mitbestimmung ist, hängt von der Ausrüstung des anderen Einzelfahrzeugs mit zusätzlichen Bremsdrucksteuereinrichtungen ab. Bei der bekannten Bremsanlage liegt eine Mitbestimmung vor, weil in dem anderen Einzelfahrzeug ein lastabhängiger Bremsdruckregler, symbolisiert durch einen Lastsensor (dort 17), vorgesehen ist.

Instationäre Phasen der Bremsbetätigung, nachstehend der Einfachheit halber als "instationäre Bremsphasen" bezeichnet, treten zu Beginn einer Bremsung aus freier Fahrt oder im Verlaufe einer Bremsung bei steigender Bremskraftanforderung auf. In einer solchen instationären Bremsphase stellt sich bei der bekannten Bremsanlage in dem anderen Einzelfahrzeug infolge der beschriebenen Signalumsetzung und der Signalübertragungswege (Druckleitung) zwischen den Einzelfahrzeugen ein verzögerter Bremsdruckaufbau ein, der in Verbindung mit der Ansprechverzögerung der in dem anderen Einzelfahrzeug eingesetzten Bremsgeräte einen Auflaufstoß, das heißt eine Kraft auf das eine Einzelfahrzeug etwa in Bewegungsrichtung des anderen Einzelfahrzeugs, zur Folge hat.

Der Erfindung liegt die Aufgabe zugrunde, ein Verfahren der eingangs erwähnten Art mit einfachen Mitteln derart weiterzubilden, daß es eine Minderung des Auflaufstoßes gewährleistet.

Diese Aufgabe wird durch die in den Patentansprüchen 1 und 7 angegebene Erfindung gelöst. Vorteilhafte Fortbildungen sowie Anordnungen zur Durchführung der Erfindung sind in den Unteransprüchen angegeben.

Die mit der Erfindung erzielte Minderung des Auflaufstoßes ist insbesondere für eine Bremsanlage vorteilhaft, deren Regelgröße in stationären Bremsphasen die zwischen die Einzelfahrzeugen ausgetauschte Kraft ist. Für derartige Bremsanlagen ist die Bezeichnung "deichselkraftgeregelt" eingebürgert, obwohl sie nicht nur in Deichselzügen sondern auch in Sattelzügen üblich sind. In einer solchen Bremsanlage stellt der vorstehend erwähnte Auflaufstoß eine bedeutende Störgröße dar.

Die Erfindung eignet sich für durch jede beliebige Art Druckmittel betätigte Bremsanlagen.

Bevorzugt kommen als das eine Einzelfahrzeug ein Motorwagen und als das andere Einzelfahrzeug ein (Deichsel- oder Sattel-)Anhänger in Betracht. In einem aus mehr als zwei Einzelfahrzeugen bestehenden Fahrzeugzug kommen aber auch der erste, zweite, dritte usw. Anhänger und der jeweils folgende Anhänger als das eine bzw. das andere Einzelfahrzeug in Frage.

Weitere Vorteile der Erfindung werden in deren nun folgender Erläuterung anhand von in Zeichnungen dargestellten Anordnungen zu ihrer Durchführung angegeben.

Unter durchgehender Verwendung durchgezogener Linien für Druckmittel leitungen und strichpunktierter Linien für elektrische Verbindungen sowie gleicher Bezugszeichen für Bauteile mit gleichen Funktionen zeigen
- Figur 1: eine Anordnung zur Durchführung der Erfindung,
- Figur 2: eine andere Anordnung zur Durchführung der Erfindung,
- Figur 3: eine weitere Anordnung zur Durchführung der Erfindung.

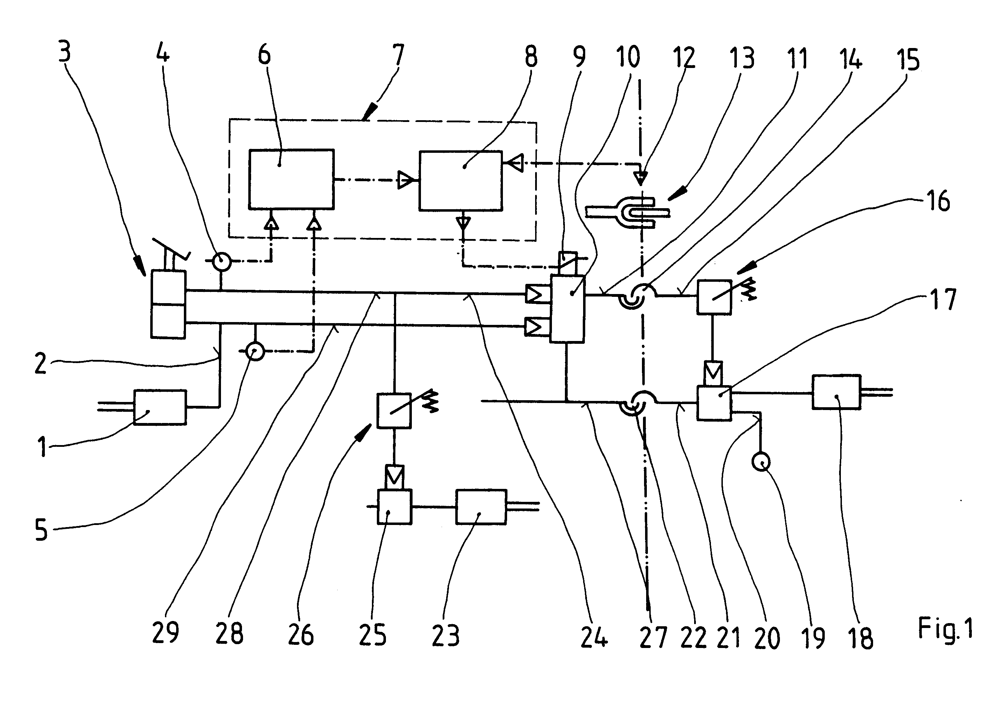

Figur 1 zeigt schematisch die Betriebsbremsanlage eines Fahrzeugzuges mit einem Motorwagen als dem einen Einzelfahrzeug und einem Deichsel- oder Sattelanhänger, der nachstehend nur noch als Anhänger in Bezug genommen wird, als dem anderen Einzelfahrzeug. Der Fahrzeugzug bzw. die Einzelfahrzeuge können bzw. müssen außerdem noch weitere Bremseinrichtungen, beispielsweise ein Parkbremsanlage und/oder eine Hilfsbremsanlage, aufweisen.

Der Motorwagen und der Anhänger sind hinsichtlich der zwischen ihnen auftretenden Kräfte durch eine Kupplung (13) gekuppelt, die je nach Art des Anhängers als Deichselkupplung oder Sattelkupplung ausgebildet ist.

Die erwähnte Betriebsbremsanlage ist eine herkömmliche Zweikreis-Zweileitungsanlage mit einer Zusatzausrüstung.

In der aus der Sicht des Betrachters links einer dicken gestrichelten Trennlinie unter Weglassung der Druckmittelbeschaffungs- und Vorratsanlage dargestellten Motorwagenbremsanlage setzt ein zweikreisiger Bremswertgeber (3) ein fahrerseits eingeleitetes Betätigungssignal - das kann eine Betätigungskraft und/oder ein Betätigungsweg sein - in Bremskraftanforderungssignale in Form von Drücken an den Ausgängen seiner beiden Kreise um, deren einer über eine Druckleitung (2) einer oder mehreren Bremsen (1) des einen Bremskreises direkt als Bremsdruck zugeführt wird und deren anderer über eine Druckleitung (28) die Beaufschlagung mit Bremsdruck einer oder mehrerer Bremsen (23) des zweiten Bremskreises unter Zwischenschaltung eines Relaisventils (25) und eines lastabhängigen Bremsdruckreglers (26), nachstehend ALB (26), steuert. Der ALB (26) ist stromaufwärts des Steuereingangs des Relaisventils (25) dargestellt, kann aber auch stromabwärts des Relaisventils (25) angeordnet sein, d. h. zwischen seinem Ausgang und den Bremsen (23). Das Relaisventil (25) und der ALB (26) können in einer Baueinheit zusammengefaßt sein.

Zur Mitbetätigung der rechts der gestrichelten Trennlinie dargestellten Anhängerbremsanlage enthält die Motorwagenbremsanlage eine Signalverarbeitungseinrichtung in Form eines Anhängersteuerventils (10) mit einem Drucksteuereingang für jeden Bremskreis, welche Drucksteuereingänge über Druckleitungen (24) und (29) ebenfalls mit den an den Ausgängen des Bremswertgebers (3) ausgesteuerten Drücken beaufschlagt werden.

Das Anhängersteuerventil (10) ist in bekannter Weise so aufgebaut, daß es im Normalfall von einem der Drücke in den Druckleitungen (24) und (29) und im Falle eines Defekts in einem Bremskreis der Motorwagenbremsanlage von dem höheren oder dem noch vorhandenen dieser Drücke gesteuert wird. Der jeweils maßgebliche Druck wird im folgenden als Bremskraftanforderungssignal herangezogen. Im bisher beschriebenen Umfang ist das Anhängersteuerventil (10) so ausgebildet, daß es an seinem Ausgang einen von dem maßgeblichen Druck und damit von dem Bremskraftanforderungssignal abhängigen Anhängersteuerdruck aussteuert, der über eine motorwagenseitige Anhängersteuerleitung (11) zu einer Steuerdruckkupplung (14) geführt wird und ein Mitbremssignal darstellt.

Das Anhängersteuerventil (10) weist außerdem einen elektrischen Steuereingang (9) auf, der zu der weiter unten näher beschriebenen Zusatzausrüstung gehört.

Zur Motorwagenbremsanlage zählt noch eine eine Vorratskupplung (22) mit der Druckbeschaffungs- und Vorratsanlage verbindende und auch das Anhängersteuerventil (10) vorratsseitig an diese anschließende motorwagenseitige Anhängervorratsleitung (27).

Die Anhängerbremsanlage wird über eine die Vorratskupplung (22) mit einem Anhängervorrat (19) verbindende anhängerseitige Vorratsleitung (20, 21) mit Druckmittel versorgt. Die Vorratsleitung (20, 21) wird über ein Anhängerbremsventil (17) geführt, welches ein abgewandeltes Relaisventil darstellt, dessen Steuereingang über eine anhängerseitige Anhängersteuerleitung (15) mit der Anhängersteuerkupplung (14) verbunden ist. In der Anhängersteuerleitung (15) ist ein anhängerseitiger ALB (16) angeordnet. Der ALB (16) kann dem Anhängerbremsventil (17) auch nachgeschaltet sein oder, wenn die Einsatzbedingungen es erlauben, ganz entfallen. Auch das Anhängerbremsventil (17) und der ALB (16) können zu einer Baueinheit zusammengefaßt sein.

Bei Beaufschlagung eines Steuereingangs mit Druck verbindet das Anhängerbremsventil (17) eine oder mehrere Bremsen (18) des Anhängers mit dem Anhängervorrat (19), bis in den Bremsen (18) ein entsprechender Bremsdruck erreicht ist. Dieser Bremsdruck steht zu dem Anhängersteuerdruck als dem Mitbremssignal in einer Relation, die durch die Auslegung des Anhängerbremsventils (17) und, soweit vorhanden, durch die jeweilige lastabhängige Einstellung des ALB (16) bestimmt ist.

Mit der Betriebsbremsanlage im bisher beschriebenen Umfang tritt in instationären Bremsphasen, d. h. zu Beginn einer Bremsung aus freier Fahrt oder wenn im Verlaufe einer Bremsung der Fahrer durch Erhöhung des in den Bremswertgeber (3) eingeleiteten Betätigungssignals die Bremskraftanforderung steigert, in der Kupplung (13) ein Auflaufstoß, d. h. eine Kraft vom Anhänger auf den Motorwagen etwa in Bewegungsrichtung des Anhängers, auf. Dieser Auflaufstoß hat seine Ursache in der Ansprechverzögerung des Anhängersteuerventils (10), des ALB (16), des Anhängerbremsventils (17) sowie in den zugehörigen Druckleitungen in Verbindung mit der Ansprechverzögerung der Bremsen (18).

Mit der nachstehend näher beschriebenen Zusatzausrüstung wird der Auflaufstoß gemindert.

Als instationäre Bremsphase wird die Zeitspanne definiert, die der maßgebliche Druck in den Druckleitungen (24) bzw. (29), also das Bremskraftanforderungssignal, zu seinem Aufbau benötigt. Ein Aufbau wird dabei so lange angenommen, wie dieser Druck wenigstens mit einer vorbestimmten Mindest-Anstiegsgeschwindigkeit zunimmt.

Zur Erfassung dieser Zeitspanne und damit der instationären Bremsphase enthält die Zusatzausrüstung eine Einschaltelektronik (4, 5, 6). Diese besteht aus den Druck in jeweils einer der Druckleitungen (24) bzw. (29) in ein elektrisches Drucksignal umsetzenden Drucksensoren (4) und (5) sowie einer das maßgebliche Drucksignal auswählenden und dieses zeitlich differenzierenden Differenziereinrichtung (6). Solange die Differenziereinrichtung (6) für den maßgeblichen Druck und damit für das Bremskraftanforderungssignal eine höhere Anstiegsgeschwindigkeit als die vorbestimmte Mindest-Anstiegsgeschwindigkeit oder diese feststellt, gibt sie ein Steuersignal ab.

Die Zusatzausrüstung enthält auch eine Kraftmeßeinrichtung (12). Vorliegend kommt es darauf an, daß diese den Auflaufstoß nach Größe und Richtung in ein elektrisches Kraftsignal umsetzt; zu anderen Zwecken kann ihr Wirkungsbereich erweitert sein.

Ferner gehört zur Zusatzausrüstung außer dem elektrischen Steuereingang (9) des Anhängersteuerventils (10) eine Steuerelektronik (8), die das Kraftsignal der Kraftmeßeinrichtung (12) und das Einschaltsignal der Einschaltelektronik (4, 5, 6) empfängt. In der Steuerelektronik (8) ist ein Toleranzband für das Kraftsignal gespeichert. Die Steuerelektronik (8) ist so ausgebildet, daß sie bei anstehendem Einschaltsignal das Kraftsignal mit dem eingespeicherten Toleranzband vergleicht und, wenn das Kraftsignal das Toleranzband überschreitet, bei der folgenden Bremsbetätigung ein Steuersignal für den elektrischen Steuereingang (9) des Anhängersteuerventils (10) abgibt. Dabei bemißt sie das Steuersignal so, daß es das Anhängersteuerventil (10) zur Veränderung des Anhängersteuerdrucks, also des Mitbremssignals, um einen vorbestimmten Wert gegenüber dem Anhängersteuerdruck in den instationären Bremsphasen der vorangegangenen Bremsbetätigung steuert.

Die Zusatzausrüstung bewirkt also eine adaptive Minderung des Auflaufstoßes. Stellt die Steuerelektronik (8) bei einer Bremsbetätigung fest, daß der Auflaufstoß (Kraftsignal) das vorbestimmte Toleranzband überschreitet, so stellt sie in instationären Bremsphasen der folgenden Bremsbetätigung mittels des Steuersignals und des elektrischen Steuereingangs (9) des Anhängersteuerventils (10) eine bestimmte Voreilung des Anhängersteuerdrucks gegenüber demjenigen in instationären Bremsphasen der vorangegangenen Bremsbetätigung ein, d. h. sie verändert das Mitbremssignal um einen vorbestimmten Wert. Oberschreitet bei dieser folgenden Bremsbetätigung der Auflaufstoß noch immer das Toleranzband, so erhöht die Steuerelektronik (8) bei der dann folgenden Bremsbetätigung das Steuersignal um seinen ursprünglichen Wert, so daß dann erneut die Voreilung um ihren ursprünglichen Wert und damit das Mitbremssignal um den vorbestimmten Wert gesteigert werden. Überschreitet bei weiteren Bremsbetätigungen der Auflaufstoß noch immer das Toleranzband, so wird dieses Verfahren fortgesetzt, bis der Auflaufstoß bei einer Bremsbetätigung das Toleranzband nicht mehr überschreitet. Die Voreilung des Anhängersteuerdrucks als Veränderung des Mitbremssignals wird also in gleichbleibenden Stufen gesteigert, bis der Auflaufstoß auf den vorbestimmten Grenzwert als gerade noch hinnehmbarer Auflaufstoß auf einer Grenze des Toleranzbandes oder in demselben liegt.

Der wie vorstehend beschrieben geminderte Auflaufstoß kann sich, beispielsweise durch Beladungsänderung des Anhängers, verändern. Er kann das vorbestimmte Toleranzband wieder überschreiten, in welchem Falle die Zusatzeinrichtung wie vorstehend beschrieben in Funktion tritt. Der Auflaufstoß kann aber auch negative Werte annehmen, also zum Auflaufzug werden. Für diesen Fall ist die oben erwähnte Eigenschaft des Kraftsignals wichtig, daß es auch die Richtung des Auflaufstoßes angibt. Die Steuerelektronik (8) nimmt beim Auftreten eines Auflaufzuges bei der bzw. den folgenden Bremsbetätigungen das Steuersignal und damit die Voreilung des Anhängersteuerdrucks und damit die Veränderung des Mitbremssignals gegenüber der jeweils vorangegangenen Bremsbetätigung jeweils um eine Stufe zurück, ja sie kann das Steuersignal auch in Richtung Nacheilung des Anhängersteuerdrucks und damit in Richtung negativer Veränderung des Mitbremssignals bemessen, bis der Auflaufstoß auf einer Grenze des Toleranzbandes oder in demselben liegt.

Das Ausführungsbeispiel kann so fortgebildet werden, daß bei schneller Bremsbetätigung, erkennbar daran, daß der maßgebliche Druck und damit das Bremskraftanforderungssignal schneller als mit einer vorbestimmten Höchst-Anstiegsgeschwindigkeit zunehmen, die Minderung des Auflaufstoßes bzw. des Auflaufzuges unterbleibt. Dies kann beispielswiese dadurch realisiert werden, daß die Einschaltelektronik (4, 5, 6) so ausgebildet ist, daß die Stärke des Einschaltsignals abhängig von der Anstiegsgeschwindigkeit des maßgeblichen Drucks bzw. des Bremskraftanforderungssignals ist und daß die Steuerelektronik (8) so ausgebildet ist, daß sie das Einschaltsignal mit einem eingespeicherten Höchstwert desselben vergleicht und bei Gleichheit sowie bei stärkerem Einschaltsignal das Steuersignal nicht abgibt.

Das Ausführungsbeispiel kann ohne und mit der vorstehenden Fortbildung so fortgebildet werden, daß die Stufung des Einschaltsignals und damit der Voreilung des Anhängersteuerdrucks und damit der vorbestimmte Wert, um den das Mitbremssignal verändert wird, von der bei der vorangegangenen Bremsbetätigung festgestellten Größe der Abweichung des Auflaufstoßes von dessen vorbestimmtem Toleranzband abhängen. Dies kann durch eine Ausbildung der Steuerelektronik (8) derart realisiert werden, daß sie die Stärke des Steuersignals an die Größe der bei der vorangegangenen Bremsbetätigung festgestellten Abweichung des Kraftsignals von dessen vorbestimmtem Toleranzband anpaßt.

Das Ausführungsbeispiel kann ohne und mit einer der oder den vorstehenden Fortbildungen des weiteren so fortgebildet werden, daß die Stufung des Steuersignals und damit der Voreilung und damit der vorbestimmte Wert, um den das Mitbremssignal verändert wird, von der Geschwindigkeit der Bremsbetätigung, erkennbar an der Anstiegsgeschwindigkeit des maßgeblichen Druckes bzw. des Bremskraftanforderungssignals, abhängen. Dies kann dadurch realisiert werden, daß die Einschaltelektronik (4, 5, 6) so ausgebildet ist, daß die Stärke des Einschaltsignals abhängig von der Anstiegsgeschwindigkeit des maßgeblichen Drucks und damit des Bremskraftanforderungssignals ist, und daß die Steuerelektronik (8) so ausgebildet ist, daß die Stärke des Steuersignals von der Stärke des Einschaltsignals abhängig ist. Für diesen Fall kann die, wie oben angegeben, bereits fortgebildete Einschaltelektronik (4, 5, 6) mitverwendet werden.

Für den Fall, daß es Schwierigkeiten bereitet, das Ende der instationären Bremsphase in Form der Mindest-Anstiegsgeschwindigkeit des maßgeblichen Drucks und damit des Bremskraftanforderungssignals zu erfassen, kann das Ausführungsbeispiel ohne und mit einer oder mehreren anderen Fortbildungen so fortgebildet werden, daß die Voreilung des Anhängersteuerdrucks und damit die Veränderung des Mitbremssignals nach der instationären Bremsphase für eine vorbestimmte Zeit aufrechterhalten werden. Dies kann durch ein Zeitglied in der Steuerelektronik (8) realisiert werden, mit dessen Hilfe diese das Steuersignal nach Abfall des Einschaltsignals um die vorbestimmte Zeit aufrechterhält.

Durch eine mit (7) bezeichnete gestrichelte Einfassungslinie ist angedeutet, daß die Einschaltelektronik (4, 5, 6) und die Steuerelektronik (8) teilweise oder ganz baulich und/oder funktionell vereinigt sein können.

Insbesondere ist insoweit an eine Vereinigung der Differenziereinrichtung (6) und der Steuerelektronik (8) zu denken.

Die Kraftmeßeinrichtung (12) ist im Bereich der Kupplung (13) dargestellt. Sie kann in diesem Bereich im Motorwagen oder im Anhänger angeordnet sein. Sie kann aber auch an anderen geeigneten Stellen des Motorwagens oder des Anhängers angeordnet sein, beispielsweise an einer Rahmentraverse.

Die Steuerelektronik (8) und die Differenziereinrichtung (6) können auf Motorwagen und Anhänger verteilt sein oder, wie die etwa daraus gebildete Baueinheit, im Motorwagen oder im Anhänger angeordnet sein. Im Falle der Anordnung der vollständigen Zusatzausrüstung im Motorwagen ist eine Lösung geschaffen, welche die Realisierung der Erfindung in Verbindung mit einem herkömmlichen Anhänger ermöglicht. Sind andererseits die Kraftmeßeinrichtung (12), die Steuerelektronik (8) und die Differenziereinrichtung (6) im Anhänger untergebracht, so kann ein herkömmlicher Motorwagen auf einfache Weise durch Einbau eines oder beider Drucksensoren (4 bzw. 5) und des elektrischen Steuereingangs (9) in das Anhängersteuerventil oder eines Anhängersteuerventils mit elektrischem Steuereingang zur Realisierung der Erfindung umgerüstet werden.

Im Falle einer Beaufschlagung nur an einem Steuereingang reagiert das Anhängersteuerventil (10) wie auf den erwähnten maßgeblichen Druck. Die Anordnung nach Figur 1 steht deshalb auch für eine solche mit einem einkreisig (durch Druck) angesteuerten Anhängersteuerventil und für eine solche mit einer Einkreis-Motorwagenbremsanlage.

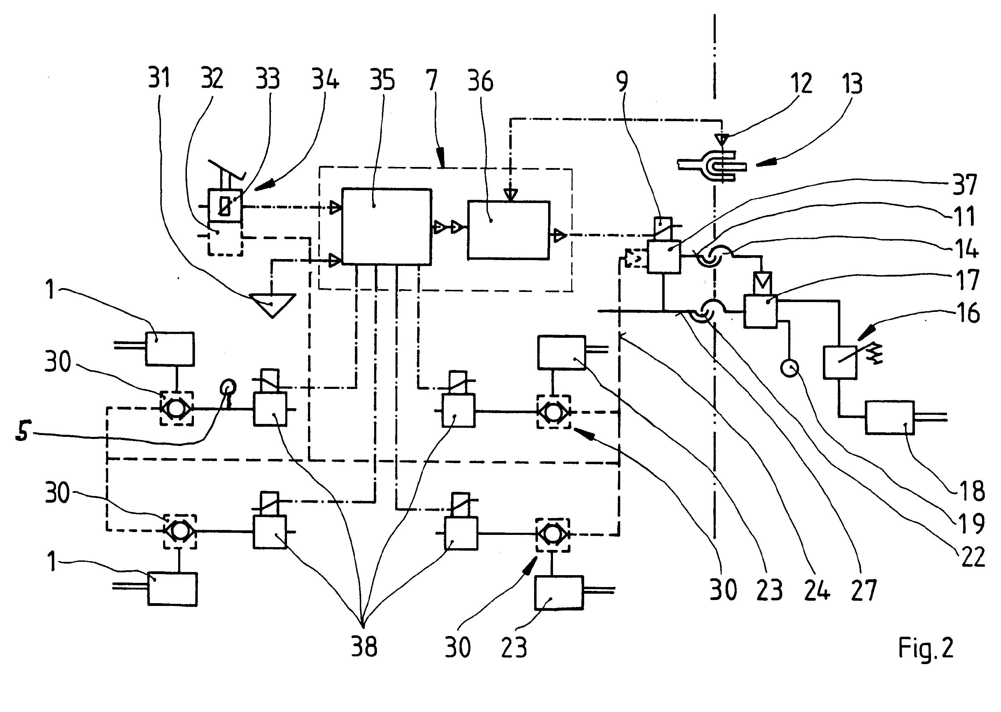

In der Anordnung nach Figur 2 ist die Anhängerbremsanlage gegenüber Figur 1 nur durch die Lage des ALB (16) verändert. Statt stromaufwärts des Steuereingangs des Anhängerbremsventils (17) ist das ALB (16) hier stromabwärts des Anhängerbremsventils (17) zwischen dessen Ausgang und den Bremsen (18) angeordnet. Eine erfindungswesentliche Auswirkung auf die Funktion der Anordnung geht mit dieser Änderung nicht einher.

Die Motorwagenbremsanlage ist hier eine elektrisch gesteuerte. Der Bremswertgeber (3) der Figur 1 ist durch eine elektrische Bremswertregeleinrichtung (33, 35, 38) ersetzt. Sie besteht aus einem elektrischen Bremswertgeber (33), einer Elektronik (35), je einem elektrischen Bremsdruckmodulator (38) für jede Bremse (1) bzw. (23) und nicht dargestellten Bremswertsensoren. Als Bremswert kommt jeder bei einer Bremsbetätigung auftretende Parameter in Betracht. Insbesondere ist insoweit an die Verzögerung des Motorwagens, die Bremskraft und den Bremsdruck zu denken.

Das hier als Signalverarbeitungseinrichtung dienende und mit (37) bezeichnete Anhängersteuerventil ist in der Grundausführung rein elektrisch gesteuert und weist wieder den elektrischen Steuereingang (9) auf. Dieser ist auf weiter unten näher beschriebene Weise an die elektrische Bremswertregeleinrichtung (33, 35, 38) angeschlossen.

Bei fahrerseitiger Einleitung des Betätigungssignals gibt der Bremswertgeber (33) ein davon abhängiges Bremswertanforderungssignal ab, welches der Elektronik (35) zugeführt und von dieser unter Berücksichtigung der von den Bremswertsensoren rückgemeldeten Bremswert-Ist-Signale sowie, gegebenenfalls, unter Berücksichtigung weiterer Signale in Bremsdrucksignale an die Bremsdruckmodulatoren (38) umgesetzt wird. Als Beispiel für den Lieferanten eines weiteren Signals ist ein Lastsensor (31) angedeutet; in die elektrische Bremswertregeleinrichtung (33, 35, 38) ist also ein ALB integriert. Als weitere Signale ist ferner beispielsweise an Raddrehzahlsignale zur Erzielung einer Blockierschutzwirkung und/oder einer Anfahrschlupfregelung zu denken.

Die Bremsdruckmodulatoren (38) steuern aufgrund der Bremsdrucksignale Bremsdruck zu der jeweils zugeordneten Bremse (1) bzw. (23) aus.

Einer dieser Bremsdrücke dient hier als Bremskraftanforderungssignal. Zu seiner Erfassung und Umsetzung in das Drucksignal dient wieder ein Drucksensor (5). Es können auch ein oder mehrere weitere Drucksensoren anderen Bremsen (1) bzw. (23) zugeordnet sein, wobei als Bremskraftanforderungssignal der Mittelwert aus diesen Drucksignalen gebildet werden kann. Diese Möglichkeit bietet sich insbesondere dann an, wenn die Bremsdrücke als Bremswert dienen, in welchem Falle die den einzelnen Bremsen (1) bzw. (23) zugeordneten Drucksensoren zugleich Bremswertsensoren sind. Der Drucksensor (5) bzw. die weiteren Drucksensoren können in den jeweils zugeordneten Bremsdruckmodulator (38) integriert sein.

Gleichzeitig mit den Bremsdrucksignalen an die Bremsdruckmodulatoren (38) gibt die Elektronik (35) ein von dem Bremswertanforderungssignal abhängiges Signal an die hier mit (36) bezeichnete Steuerelektronik ab, die dieses in ein davon abhängiges Steuersignal für den Steuereingang (9) des Anhängersteuerventils (37) umsetzt. Dieses steuert als Mitbremssignal einen dem Steuersignal entsprechenden Anhängersteuerdruck aus.

Die Aufgabe der Differenziereinrichtung (6) der Figur 1 ist hier in die Steuerelektronik (36) integriert, der zu diesem Zweck das Drucksignal des Drucksensors (5) und, gegebenenfalls, die der weiteren Drucksensoren bzw. deren Mittelwert zugeführt werden. Diese dient also, in Verbindung mit dem Drucksensor (5) und, gegebenenfalls, den weiteren Drucksensoren, auch als Einschaltelektronik.

Die Steuerelektronik (36) ist dementsprechend so ausgebildet, daß sie die Stärke des Steuersignals entsprechend den näheren Erläuterungen zur Anordnung nach Figur 1 nach Maßgabe des Kraftsignals um den vorbestimmten Wert erhöht bzw. herabsetzt.

In der bis hierher beschriebenen Grundausführung kann das hier als Signalverarbeitungseinrichtung dienende Anhängersteuerventil (37) als elektrischer Druckmodulator nach Art der oben mit (38) bezeichneten ausgebildet sein.

Die Motorwagenbremsanlage dieser Anordnung kann durch eine Notsteuereinrichtung fortgebildet werden, wie sie mit gestrichelten Linien angedeutet ist.

Zu diesem Zweck ist der Bremswertgeber (33) um einen Druckteil (32) zu einem kombinierten Elektro-Druck-Bremswertgeber (34) erweitert. Der Druckteil (32) entspricht einem Kreis des Bremswertgebers (3) der Figur 1. Jeder Bremse (1) bzw. (23) ist ein Zweiwegeventil (30) vorgeschaltet, über dessen einen Strömungspfad ihr der von dem jeweiligen Druckmodulator (38) ausgesteuerte Bremsdruck und über dessen anderen Strömungspfad sowie über ein nicht näher bezeichnetes Druckleitungssystem ihr der am Ausgang des Druckteils (32) ausgesteuerte Druck zuführbar ist. Das Anhängersteuerventil (37) ist bei dieser Fortbildung mit einem nicht näher bezeichneten Drucksteuereingang versehen, der über eine wieder mit (24) bezeichnete Druckleitung an das erwähnte Druckleitungssystem und damit an den Ausgang des Druckteils (32) angeschlossen ist. Durch nicht dargestellte Einrichtungen bzw. Ausgestaltungen, beispielsweise des Bremswertgebers (34), ist im Normalbetrieb, also bei intakter elektrischer Bremswertregeleinrichtung (33, 35, 38) der Vorrang derselben gegenüber der Notsteuereinrichtung sichergestellt. Das bedeutet, daß im Normalbetrieb die Bremsen (1) und (23) mit dem von dem jeweiligen Bremsdruckmodulator (38) ausgesteuerten Bremsdruck und das Anhängersteuerventil (37) von dem Steuersignal der Steuerelektronik (36) gesteuert werden.

Für die Notsteuereinrichtung sind vorliegend keine Maßnahmen zur Minderung des Auflaufstoßes getroffen. Es liegt jedoch auf der Hand, daß die Notsteuereinrichtung diesbezüglich unter entsprechender Anwendung weiter oben beschriebener Lösungsmittel fortgebildet werden kann.

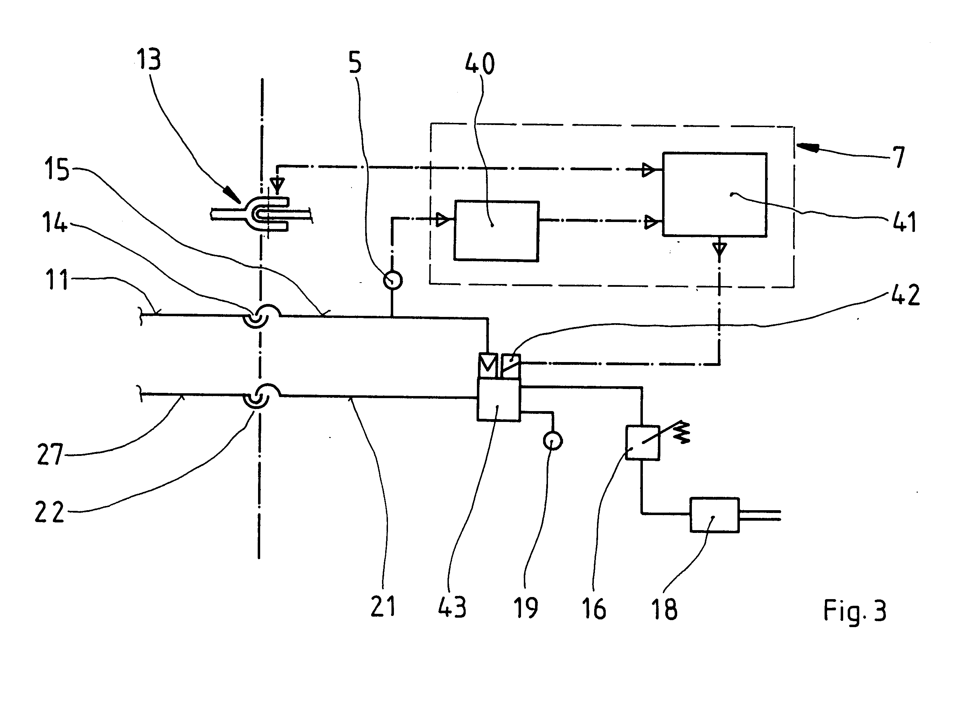

In der Anordnung gemäß Figur 3 ist die Zusatzausrüstung vollständig in dem Anhänger untergebracht. Diese Anordnung bietet den Vorteil der Realisierung der Erfindung ohne jegliche Maßnahme am Motorwagen. Das bedeutet, daß ein so ausgerüsteter Anhänger an jeden Motorwagen mit Zweileitungs-Anhängerbremsanschluß gekuppelt werden kann und die Erfindung dennoch realisierbar ist.

Als Signalverarbeitungseinrichtung dient hier das mit (43) bezeichnete Anhängerbremsventil. Es weist neben seinem Steuereingang für das Mitbremssignal in Form des Anhängersteuerdrucks an der Anhängersteuerkupplung (14) und in der anhängerseitigen Anhängersteuerleitung (15) einen elektrischen Steuereingang (42) auf.

Die Einschaltelektronik (5, 40) besteht hier aus einem wieder mit (5) bezeichneten Drucksensor und einer Differenziereinrichtung (40). Der Drucksensor (5) setzt hier den Anhängersteuerdruck an der Anhängersteuerkupplung (14) oder in der Anhängersteuerleitung (15) in das Drucksignal um. Die Differenziereinrichtung (40) arbeitet wie die Differenziereinrichtung (6) der Anordnung nach Figur 1, so daß hier die instationäre Bremsphase anhand der Anstiegsgeschwindigkeit des Anhängersteuerdrucks bzw. des Mitbremssignals erfaßt wird.

Die hier mit (41) bezeichnete Steuerelektronik wirkt wie die Steuerelektronik (8) der Anordnung nach Figur 1 Anders als dort bewirkt sie jedoch mittels des Steuersignals und des elektrischen Steuereingangs (42) des Anhängerbremsventils (43) eine bestimmte Voreilung oder Nacheilung des Bremsdrucks im Anhänger, genauer: in dessen Bremsen (18), gegenüber dem durch den Anhängersteuerdruck als dem Mitbremssignal und durch das ALB (16) sowie, gegebenenfalls, durch Voreilungen oder Nacheilungen aus früheren Bremsbetätigungen vorgegebenen Bremsdruck. Diese Anordnung wirkt im Ergebnis wie die vorangegangenen Anordnungen, greift jedoch statt am Mitbremssignal an dem Bremsdruck im Anhänger und damit an der Relation zwischen dem Bremsdruck im Anhänger, genauer: in dessen Bremsen (18), zu dem Anhängersteuerdruck und damit zum Mitbremssignal an.

Unter Berücksichtigung dieses Unterschiedes gelten für diese Anordnung auch die bei den früheren Anordnungen erwähnten Fortbildungsmöglichkeiten.

Mit der Heranziehung des maßgeblichen Drucks bzw. des Bremsdrucks als Bremskraftanforderungssignal bieten die vorstehenden Anordnungen eine besonders einfach zu realisierende Lösung für die Definition der instationären Bremsphase. Es ist aber auch jede andere geeignete Methode zur Definition der instationären Bremsphase einsetzbar. In der Anordnung gemäß Figur 2 könnten beispielsweise anstelle des Bremsdrucks als Bremskraftanforderungssignal charakteristische Punkte im Verlauf des jeweiligen Bremswertes oder seiner Anstiegsgeschwindigkeit oder eine Mindestanstiegsgeschwindigkeit des Bremswertes herangezogen werden.

Soweit sich aus den vorstehenden Ausführungen nichts anderes ergibt, gelten die für eine Anordnung gemachten Aussagen für die anderen Anordnungen direkt oder in entsprechender Weise mit.

Der Fachmann erkennt, daß die Tragweite der Erfindung in den vorstehenden Anordnungen nicht erschöpfend beschrieben ist. Der Fachmann erkennt insbesondere, daß in einem aus mehr als zwei Einzelfahrzeugen bestehenden Fahrzeugzug das für die genannnten Anordnungen Gesagte in entsprechender Weise auch für zwei (Deichsel- oder Sattel-) Anhänger als das eine und das andere Einzelfahrzeug in entsprechender Weise gilt, wobei in dem einen Einzelfahrzeug an die Stelle des Bremswertgebers dessen Anhängerbremsventil, gegebenenfalls mit zugehörigen Zusatzeinrichtungen, tritt.

## Patentansprüche

1. Verfahren zur Abbremsung eines mit druckbetätigten Bremsen ausgerüsteten Fahrzeugzuges, in welchem bei einer Bremsbetätigung in einem Einzelfahrzeug des Fahrzeugzuges ein Bremskraftanforderungssignal erzeugt und von diesem Einzelfahrzeug ein Mitbremssignal wenigstens zur Mitsteuerung des Bremsdrucks in einem anderen Einzelfahrzeug abgegeben wird dadurch gekennzeichnet,
daß in instationären Phasen der Bremsbetätigung das Mitbremssignal gegenüber dem Mitbremssignal in instationären Phasen der vorangegangenen Bremsbetätigung um einen vorbestimmten Wert verändert wird, wenn bei der vorangegangenen Bremsbetätigung ein ein vorbestimmtes Toleranzband überschreitender Auflaufstoß festgestellt wurde.

2. Verfahren nach Anspruch 1, dadurch gekennzeichnet,
daß als instationäre Phase der Bremsbetätigung die Zeitspanne gilt, während der das Bremskraftanforderungssignal wenigstens mit einer vorbestimmten Mindest-Anstiegsgeschwindigkeit zunimmt.

3. Verfahren nach einem der Ansprüche 1 oder 2, dadurch gekennzeichnet,
daß die Veränderung des Mitbremssignals um den vorbestimmten Wert nicht vorgenommen wird, wenn das Bremskraftanforderungssignal schneller als mit einer vorbestimmten Höchst-Anstiegsgeschwindigkeit zunimmt.

4. Verfahren nach einem der vorhergehenden Ansprüche, dadurch gekennzeichnet,
daß der vorbestimte Wert, um den das Mitbremssignal verändert wird, von der bei der vorangegangenen Bremsbetätigung festgestellten Größe der Abweichung des Auflaufstoßes von dessen vorbestimmtem Toleranzband abhängt.

5. Verfahren nach einem der vorhergehenden Ansprüche, dadurch gekennzeichnet,
daß der vorbestimmte Wert, um den das Mitbremssignal verändert wird, von der Anstiegsgeschwindigkeit des Bremskraftanforderungssignals abhängt.

6. Verfahren nach einem der vorhergehenden Ansprüche, dadurch gekennzeichnet,
daß die Veränderung des Mitbremssignals um den vorbestimten Wert nach der instationären Phase der Bremsbetätigung für eine vorbestimmte Zeit aufrechterhalten wird.

7. Verfahren zur Abbremsung eines mit druckbetätigten Bremsen ausgerüsteten Fahrzeugzuges, in welchem bei einer Bremsbetätigung in einem Einzelfahrzeug des Fahrzeugzuges ein Bremskraftanforderungssignal erzeugt und von diesem Einzelfahrzeug ein Mitbremssignal wenigstens zur Mitsteuerung des Bremsdrucks in einem anderen Einzelfahrzeug des Fahrzeugzuges abgegeben wird,
dadurch gekennzeichnet,
daß in instationären Phasen der Bremsbetätigung die Relation zwischen dem Bremsdruck in dem anderen Einzelfahrzeug und dem Mitbremssignal gegenüber der entsprechenden Relation in instationären Phasen der vorangegangenen Bremsbetätigung durch Änderung des Bremsdrucks in dem anderen Einzelfahrzeug um einen vorbestimmten Wert verändert wird, wenn bei der vorangegangenen Bremsbetätigung ein ein vorbestimmtes Toleranzband überschreitender Auflaufstoß festgestellt wurde.

8. Verfahren nach Anspruch 7, dadurch gekennzeichnet,
daß als instationäre Phase der Bremsbetätigung die Zeitspanne gilt, während der das Mitbremssignal wenigstens mit einer vorbestimmten Mindest-Anstiegsgeschwindigkeit zunimmt.

9. Verfahren nach einem der Ansprüche 7 oder 8, dadurch gekennzeichnet,
daß die Veränderung der Relation zwischen dem Bremsdruck in dem anderen Einzelfahrzeug und dem Mitbremssignal um den vorbestimmten Wert nicht vorgenommen wird, wenn das Mitbremssignal schneller als mit einer vorbestimmten Höchst-Anstiegsgeschwindigkeit zunimmt.

10. Verfahren nach einem der Ansprüche 7 bis 9, dadurch gekennzeichnet,
daß der vorbestimmte Wert, um den die Relation zwischen dem Bremsdruck in dem anderen Einzelfahrzeug und dem Mitbremssignal verändert wird, von der bei der vorangegangenen Bremsbetätigung festgestellten Größe der Abweichung des Auflaufstoßes von dessen vorbestimmtem Toleranzband abhängt.

11. Verfahren nach einem der Ansprüche 7 bis 10, dadurch gekennzeichnet,
daß der vorbestimmte Wert, um den die Relation des Bremsdrucks in dem anderen Einzelfahrzeug zum Mitbremssignal verändert wird, von der Anstiegsgeschwindigkeit des Mitbremssignals abhängt.

12. Verfahren nach einem der Ansprüche 7 bis 11, dadurch gekennzeichnet,
daß die Veränderung der Relation zwischen dem Bremsdruck in dem anderen Einzelfahrzeug und dem Mitbremssignal um den vorbestimmten Wert nach der instationären Phase der Bremsbetätigung für eine vorbestimmte Zeit aufrechterhalten wird.

13. Verfahren nach einem der vorhergehenden Ansprüche, dadurch gekennzeichnet, daß das eine Einzelfahrzeug ein Motorwagen und das andere Einzelfahrzeug ein von diesem gezogener Anhänger ist.

14. Anordnung zur Durchführung des Verfahrens nach Anspruch 1, gekennzeichnet durch die Merkmale:
a) es ist eine den Auflaufstoß in ein elektrisches Kraftsignal umsetzende Kraftmeßeinrichtung (12) vorgesehen;
b) es ist eine das Mitbremssignal abgebende, elektrisch wenigstens mitsteuerbare Signalverarbeitungseinrichtung (Anhängersteuerventil 10; 37) vorgesehen;
c) es ist eine ein den Beginn einer instationären Phase der Bremsbetätigung kennzeichnendes Einschaltsignal und das Kraftsignal empfangende und bei anstehendem Einschaltsignal ein Steuersignal für die Signalverarbeitungseinrichtung (Anhängersteuerventil 10; 37) abgebende Steuerelektronik (8; 36) vorgesehen;
d) die Steuerelektronik (8; 36) ist so ausgebildet, daß sie bei anstehendem Einschaltsignal das Kraftsignal mit dem eingespeicherten vorbestimmten Toleranzband vergleicht und im Falle einer Überschreitung des Toleranzbandes bei der nächsten Bremsbetätigung das Steuersignal so bemißt, daß die Signalverarbeitungseinrichtung (Anhängersteuerventil 10; 37) zur Veränderung des Mitbremssignals um den vorbestimmten Wert gesteuert wird.

15. Anordnung nach Anspruch 14, dadurch gekennzeichnet,
daß eine die Anstiegsgeschwindigkeit des Bremskraftanforderungssignals erfassende und oberhalb einer vorbestimmten Mindest-Anstiegsgeschwindigkeit das Einschaltsignal abgebende Einschaltelektronik (4, 5, 6; 5, 36) vorgesehen ist.

16. Anordnung nach Anspruch 15,
gekennzeichnet durch die Merkmale:
a) die Einschaltelektronik (4, 5, 6; 5, 36) ist so ausgebildet, daß die Stärke des Einschaltsignals abhängig von der Anstiegsgeschwindigkeit des Bremskraftsignals ist;
b) die Steuerelektronik (8; 36) ist so ausgebildet, daß sie das Einschaltsignal mit einem eingespeicherten Höchstwert vergleicht und bei Gleichheit sowie bei den Höchstwert übersteigendem Einschaltsignal das Steuersignal nicht abgibt.

17. Anordnung nach einem der Ansprüche 14 bis 16, dadurch gekennzeichnet,
daß die Steuerelektronik (8; 36) so ausgebildet ist, daß sie die Stärke des Steuersignals an die Größe der bei der vorangegangenen Bremsbetätigung festgestellten Abweichung des Kraftsignals von dessen vorbestimmtem Toleranzband anpaßt.

18. Anordnung nach einem der Ansprüche 15 bis 17, gekennzeichnet durch die Merkmale:
a) die Einschaltelektronik (4, 5, 6; 5, 36) ist so ausgebildet, daß die Stärke des Einschaltsignals abhängig von der Anstiegsgeschwindigkeit des Bremskraftsignals ist;
b) die steuerelektronik (8; 36) ist so ausgebildet, daß die Stärke des Steuersignals abhängig von der Stärke des Einschaltsignals ist.

19. Anordnung nach einem der Ansprüche 14 bis 18, dadurch gekennzeichnet,
daß die steuerelektronik (8; 36) ein Zeitglied enthält, mit dessen Hilfe sie das Steuersignal nach Abfall des Einschaltsignals um die vorbestimmte Zeit aufrechterhält.

20. Anordnung nach einem der Ansprüche 15 bis 19, wobei das Bremskraftanforderungssignal von einem Druck in dem einen Einzelfahrzeug gebildet wird,
dadurch gekennzeichnet,
daß die Einschaltelektronik (4, 5, 6; 5, 36) von wenigstens einem den genannten Druck in ein elektrisches Drucksignal umsetzenden Drucksensor (4, 5) und einer dieses Drucksignal zeitlich differenzierendes Differenziereinrichtung (6; 36) gebildet wird.

21. Anordnung zur Durchführung des Verfahrens nach Anspruch 7,
gekennzeichnet durch die Merkmale:
a) es ist eine den Auflaufstoß in ein elektrisches Kraftsignal umsetzende Kraftmeßeinrichtung (12) vorgesehen;
b) es ist eine von dem Mitbremssignal steuerbare und elektrisch wenigstens mitsteuerbare Signalverarbeitungseinrichtung (Anhängerbremsventil 43) vorgesehen;
c) es ist eine ein den Beginn einer instationären Bremsphase der Bremsbetätigung kennzeichnendes Einschaltsignal und das Kraftsignal empfangende und bei anstehendem Einschaltsignal ein Steuersignal für die Signalverarbeitungseinrichtung (Anhängerbremsventil 43) abgebende Steuerelektronik (41) vorgesehen;
d) die Steuerelektronik (41) ist so ausgebildet, daß sie bei anstehendem Einschaltsignal das Kraftsignal mit dem eingespeicherten vorbestimmten Toleranzband vergleicht und im Falle einer Überschreitung desselben bei der nächsten Bremsbetätigung das Steuersignal so bemißt, daß die Signalverarbeitungseinrichtung (Anhängerbremsventil 43) zur Veränderung des Bremsdrucks in dem anderen Einzelfahrzeug um den vorbestimmten Wert gegenüber dem von dem Mitbremssignal bestimmten Bremsdruck in dem anderen Einzelfahrzeug gesteuert wird.

22. Anordnung nach Anspruch 21, dadurch gekennzeichnet,
daß eine die Anstiegsgeschwindigkeit des Mitbremssignals erfassende und oberhalb einer vorbestimmten Mindest-Anstiegsgeschwindigkeit das Einschaltsignal abgebende Einschaltelektronik (5, 40) vorgesehen ist.

23. Anordnung nach Anspruch 22,
gekennzeichnet durch die Merkmale:
a) Die Einschaltelektronik (5, 40) ist so ausgebildet, daß die Stärke des Einschaltsignals abhängig von der Anstiegsgeschwindigkeit des Mitbremssignals ist;
b) die Steuerelektronik (41) ist so ausgebildet, daß sie das Einschaltsignal mit einem eingespeicherten Höchstwert vergleicht und bei Gleichheit sowie bei den Höchstwert übersteigendem Einschaltsignal das Steuersignal nicht abgibt.

24. Anordnung nach einem der Ansprüche 21 bis 23,
dadurch gekennzeichnet,
daß die Steuerelektronik (41) so ausgebildet ist, daß sie die Stärke des Steuersignals an die Größe der bei der vorangegangenen Bremsbetätigung festgestellten Abweichung des Kraftsignals von dessen vorbestimmtem Toleranzband anpaßt.

25. Anordnung nach einem der Ansprüche 21 bis 24, gekennzeichnet durch die Merkmale:
a) Die Einschaltelektronik (5, 40) ist so ausgebildet, daß die Stärke des Einschaltsignals abhängig von der Anstiegsgeschwindigkeit des Mitbremssignals ist;
b) die Steuerelektronik (41) ist so ausgebildet, daß die Stärke des Steuersignals von der Stärke des Einschaltsignals abhängig ist.

26. Anordnung nach einem der Ansprüche 21 bis 25,
dadurch gekennzeichnet,
daß die Steuerelektronik (41) ein Zeitglied enthält, mit dessen Hilfe sie das Steuersignal nach Abfall des Einschaltsignals um die vorbestimmte Zeit aufrechterhält.

27. Anordnung nach einem der Ansprüche 21 bis 26,
wobei das Mitbremssignal ein Anhängersteuerdruck ist, dadurch gekennzeichnet,
daß die Einschaltelektronik (5, 40) von einem den Anhängersteuerdruck in ein elektrisches Drucksignal umsetzenden Drucksensor (5) und einer dieses Drucksignal zeitlich differenzierenden Differenziereinrichtung (40) gebildet wird.

28. Anordnung nach einem der Ansprüche 14 bis 27,
dadurch gekennzeichnet,
daß die Einschaltelektronik (4, 5, 6; 5, 36; 5, 40) und die Steuerelektronik (8; 36; 41) wenigstens teilweise baulich und/oder funktionell vereinigt sind.

29. Anordnung nach einem der Ansprüche 14 bis 28, wobei die Einzelfahrzeuge durch eine den Auflaufstoß aufnehmende Kupplung (13) verbunden sind,
dadurch gekennzeichnet,
daß die Kraftmeßeinrichtung (12) an der Kupplung (13) angeordnet ist.

30. Anordnung nach einem der Ansprüche 14 bis 29,
dadurch gekennzeichnet,
daß die Steuerelektronik (6; 36) und/oder die Einschaltelektronik (4, 5, 6; 5, 36) und/oder die Kraftmeßeinrichtung (12) und die Signalverarbeitungseinrichtung (Anhängersteuerventil 10; 37) in dem einen Einzelfahrzeug angeordnet sind.

31. Anordnung nach einem der Ansprüche 22 bis 29,
dadurch gekennzeichnet,
daß die Steuerelektronik (41), die Einschaltelektronik (5, 40), die Kraftmeßeinrichtung (12) und die Signalverarbeitungseinrichtung (Anhängerbremsventil 43) in dem anderen Einzelfahrzeug angeordnet sind.

## Claims

1. Method of braking a vehicle combination equipped with pressure-actuated brakes, wherein, when the brakes are actuated in an individual vehicle of the vehicle combination, a brake force requirement signal is produced and a joint braking signal is emitted from that individual vehicle at least for the joint control of the braking pressure in another individual vehicle, characterised in that, during non-stationary phases of the brake actuation, the joint braking signal is altered by a predetermined amount in relation to the joint braking signal during non-stationary phases of the previous brake actuation if a run-on push exceeding a predetermined tolerance band was detected during the previous brake actuation.

2. Method according to claim 1, characterised in that the non-stationary phase of the brake actuation is the time span during which the brake force requirement signal increases at at least a predetermined minimum rate of increase.

3. Method according to either claim 1 or claim 2, characterised in that the alteration to the joint braking signal by the predetermined amount is not effected if the brake force requirement signal increases faster than a predetermined maximum rate of increase.

4. Method according to any one of the preceding claims, characterised in that the predetermined amount by which the joint braking signal is altered depends on the size, detected during the previous brake actuation, of the departure of the run-on push from its predetermined tolerance band.

5. Method according to any one of the preceding claims, characterised in that the predetermined amount by which the joint braking signal is altered depends on the rate of increase of the brake force requirement signal.

6. Method according to any one of the preceding claims, characterised in that the alteration to the joint braking signal by the predetermined amount is maintained for a predetermined time period after the non-stationary phase of the brake actuation.

7. Method of braking a vehicle combination equipped with pressure-actuated brakes, wherein, when the brakes are actuated in an individual vehicle of the vehicle combination, a brake force requirement signal is produced and a joint braking signal is emitted from that individual vehicle at least for the joint control of the braking pressure in another individual vehicle of the vehicle combination, characterised in that, during non-stationary phases of the brake actuation, the relationship between the braking pressure in the other individual vehicle and the joint braking signal is altered in relation to the corresponding relationship during non-stationary phases of the previous brake actuation by altering the braking pressure in the other individual vehicle by a predetermined amount if a run-on push exceeding a predetermined tolerance band was detected during the previous brake actuation.

8. Method according to claim 7, characterised in that the non-stationary phase of the brake actuation is the time span during which the joint braking signal increases at at least a predetermined minimum rate of increase.

9. Method according to either claim 7 or claim 8, characterised in that the alteration to the relationship between the braking pressure in the other individual vehicle and the joint braking signal by the predetermined amount is not effected if the joint braking signal increases faster than a predetermined maximum rate of increase.

10. Method according to any one of claims 7 to 9, characterised in that the predetermined amount by which the relationship between the braking pressure in the other individual vehicle and the joint braking signal is altered depends on the size, detected during the previous brake actuation, of the departure of the run-on push from its predetermined tolerance band.

11. Method according to any one of claims 7 to 10, characterised in that the predetermined amount by which the relationship between the braking pressure in the other individual vehicle and the joint braking signal is altered depends on the rate of increase of the joint braking signal.

12. Method according to any one of claims 7 to 11, characterised in that the alteration to the relationship between the braking pressure in the other individual vehicle and the joint braking signal by the predetermined amount is maintained for a predetermined time period after the non-stationary phase of the brake actuation.

13. Method according to any one of the preceding claims, characterised in that the one individual vehicle is a motorised vehicle and the other individual vehicle is a trailer drawn by that motorised vehicle.

14. Arrangement for carrying out the method according to claim 1, characterised by the features:
a) a force-measuring device (12) is provided that converts the run-on push into an electrical signal;
b) a signal-processing device (trailer control valve 10; 37) is provided that emits the joint braking signal and that can be at least jointly controlled electrically;
c) an electronic control device (8; 36) is provided that receives a switch-on signal indicating the beginning of a non-stationary phase of the brake actuation, and the electrical signal, and, if a switch-on signal is present, emits a control signal for the signal-processing device (trailer control valve 10; 37);
d) the electronic control device (8; 36) is such that, if a switch-on signal is present, it compares the electrical signal with the stored predetermined tolerance band and, if the tolerance band is exceeded, so adjusts the control signal during the next brake actuation that the signal processing device (trailer control valve 10; 37) is controlled to alter the joint braking signal by the predetermined amount.

15. Arrangement according to claim 14, characterised in that an electronic switch-on device (4, 5, 6; 5, 36) is provided that detects the rate of increase of the brake force requirement signal and, above a predetermined minimum rate of increase, emits the switch-on signal.

16. Arrangement according to claim 15, characterised by the features:
a) the electronic switch-on device (4, 5, 6; 5, 36) is such that the strength of the switch-on signal is dependent on the rate of increase of the brake force signal;
b) the electronic control device (8; 36) is such that it compares the switch-on signal with a stored maximum value and, if they are the same or if the switch-on signal exceeds the maximum value, it does not emit the control signal.

17. Arrangement according to any one of claims 14 to 16, characterised in that the electronic control device (8; 36) is such that it adapts the strength of the control signal to the size of the departure, detected during the previous brake actuation, of the electrical signal from its predetermined tolerance band.

18. Arrangement according to any one of claims 15 to 17, characterised by the features:
a) the electronic switch-on device (4, 5, 6; 5, 36) is such that the strength of the switch-on signal is dependent on the rate of increase of the brake force signal;
b) the electronic control device (8; 36) is such that the strength of the control signal is dependent on the strength of the switch-on signal.

19. Arrangement according to any one of claims 14 to 18, characterised in that the electronic control device (8; 36) comprises a timing member by means of which it maintains the control signal for the predetermined time period after the switch-on signal has fallen.

20. Arrangement according to any one of claims 15 to 19, wherein the brake force requirement signal is formed by a pressure in the one individual vehicle, characterised in that the electronic switch-on device (4, 5, 6; 5, 36) is formed by at least one pressure sensor (4, 5) that converts the said pressure into an electrical pressure signal, and by a differentiation device (6; 36) that differentiates that pressure signal with respect to time.

21. Arrangement for carrying out the method according to claim 7, characterised by the features:
a) a force-measuring device (12) is provided that converts the run-on push into an electrical signal;
b) a signal-processing device (trailer brake valve 43) is provided that can be controlled by the joint braking signal and can be at least jointly controlled electrically;
c) an electronic control device (41) is provided that receives a switch-on signal indicating the beginning of a non-stationary braking phase of the brake actuation, and the electrical signal, and, if a switch-on signal is present, emits a control signal for the signal-processing device (trailer brake valve 43);
d) the electronic control device (41) is such that, if a switch-on signal is present, it compares the electrical signal with the stored predetermined tolerance band and, if the tolerance band is exceeded, so adjusts the control signal during the next brake actuation that the signal processing device (trailer brake valve 43) is controlled to alter the braking pressure in the other individual vehicle by the predetermined amount in relation to the braking pressure determined by the joint braking signal in the other individual vehicle.

22. Arrangement according to claim 21, characterised in that an electronic switch-on device (5, 40) is provided that detects the rate of increase of the joint braking signal and, above a predetermined minimum rate of increase, emits the switch-on signal.

23. Arrangement according to claim 22, characterised by the features:
a) the electronic switch-on device (5, 40) is such that the strength of the switch-on signal is dependent on the rate of increase of the joint braking signal;
b) the electronic control device (41) is such that it compares the switch-on signal with a stored maximum value and, if they are the same or if the switch-on signal exceeds the maximum value, it does not emit the control signal.

24. Arrangement according to any one of claims 21 to 23, characterised in that the electronic control device (41) is such that it adapts the strength of the control signal to the size of the departure, detected during the previous brake actuation, of the electrical signal from its predetermined tolerance band.

25. Arrangement according to any one of claims 21 to 24, characterised by the features:
a) the electronic switch-on device (5, 40) is such that the strength of the switch-on signal is dependent on the rate of increase of the joint braking signal;
b) the electronic control device (41) is such that the strength of the control signal is dependent on the strength of the switch-on signal.

26. Arrangement according to any one of claims 21 to 25, characterised in that the electronic control device (41) comprises a timing member by means of which it maintains the control signal for the predetermined time period after the switch-on signal has fallen.

27. Arrangement according to any one of claims 21 to 26, wherein the joint braking signal is a trailer control pressure, characterised in that the electronic switch-on device (5, 40) is formed by a pressure sensor (5) that converts the trailer control pressure into an electrical pressure signal, and by a differentiation device (40) that differentiates that pressure signal with respect to time.

28. Arrangement according to any one of claims 14 to 27, characterised in that the electronic switch-on device (4, 5, 6; 5, 36; 5, 40) and the electronic control device (8; 36; 41) are, at least partially, combined structurally and/or functionally.

29. Arrangement according to any one of claims 14 to 28, wherein the individual vehicles are connected by a coupling (13) absorbing the run-on push, characterised in that the force-measuring device (12) is arranged on the coupling (13).

30. Arrangement according to any one of claims 14 to 29, characterised in that the electronic control device (6; 36) and/or the electronic switch-on device (4, 5, 6; 5, 36) and/or the force-measuring device (12) and the signal processing device (trailer control valve 10; 37) are arranged in the one individual vehicle.

31. Arrangement according to any one of claims 22 to 29, characterised in that the electronic control device (41), the electronic switch-on device (5, 40), the force-measuring device (12) and the signal processing device (trailer brake valve 43) are arranged in the other individual vehicle.

## Revendications

1. Procédé de freinage d'un train de véhicules équipés de freins actionnés par pression, dans lequel, lors d'un actionnement des freins dans un véhicule individuel du train de véhicules, un signal de demande de force de freinage est produit et un signal de cofreinage est émis depuis ce véhicule individuel, au moins pour commander conjointement la pression de freinage dans un autre véhicule individuel,
caractérisé
par le fait que, dans les phases non stationnaires de l'actionnement des feins, le signal de cofreinage est soumis, par rapport au signal de cofreinage dans les phases non stationnaires de l'actionnement précédent des freins, à une modification d'une valeur prédéterminée si, lors de l'actionnement précédent des freins, il a été constaté un choc d'impact excédant une plage de tolérance prédéterminée.

2. Procédé selon revendication 1, caractérisé par le fait que le laps de temps pendant lequel le signal de demande de force de freinage croît au moins avec une vitesse de croissance minimale prédéterminée est considéré comme phase non stationnaire de l'actionnement des freins.

3. Procédé selon l'une des revendications 1 ou 2,
caractérisé
par le fait que la modification du signal de cofreinage, modification de ladite valeur prédéterminée, n'est pas effectuée si le signal de demande de force de freinage croît plus rapidement qu'avec une vitesse de croissance maximale prédéterminée.

4. Procédé selon l'une des revendications précédentes,
caractérisé
par le fait que la valeur prédéterminée dont le signal de cofreinage est modifié dépend de la grandeur, constatée lors de l'actionnement des freins précédent, de l'écart entre le choc d'impact et sa plage de tolérance prédéterminée.

5. Procédé selon l'une des revendications précédentes,
caractérisé
par le fait que la valeur prédéterminée dont le signal de cofreinage est modifié dépend de la vitesse de croissance du signal de demande de force de freinage.

6. Procédé selon l'une des revendications précédentes,
caractérisé
par le fait que la modification du signal de cofreinage, modification de ladite valeur prédéterminée, est maintenue pendant un temps prédéterminé après la phase non stationnaire de l'actionnement des freins.

7. Procédé de freinage d'un véhicule équipé de freins actionnés par pression, dans lequel, en cas d'actionnement des freins dans un véhicule individuel du train de véhicules, un signal de demande de force de freinage est produit et un signal de cofreinage, au moins pour commander conjointement la pression de freinage dans un autre véhicule individuel dudit train de véhicules, est émis depuis ledit véhicule individuel,
caractérisé
par le fait que, dans les phases non stationnaires de l'actionnement des freins, la relation entre la pression de freinage dans l'autre véhicule individuel et le signal de cofreinage est soumise, par rapport à la relation correspondante dans des phases non stationnaires de l'actionnement précédent des freins, à une modification d'une valeur prédéterminée, exécutée par modification de la pression de freinage dans l'autre véhicule individuel, cela s'il a été constaté un choc d'impact excédant une plage de tolérance prédéterminée lors de l'actionnement précédent des freins.

8. Procédé selon revendication 7, caractérisé par le fait que le laps de temps pendant lequel le signal de cofreinage croît avec au moins une vitesse de croissance minimale prédéterminée est considéré comme phase non stationnaire de l'actionnement des freins.

9. Procédé selon l'une des revendications 7 ou 8,
caractérisé
par le fait que la modification, de ladite valeur prédéterminée, de la relation entre la pression de freinage dans l'autre véhicule individuel et le signal de cofreinage n'est pas effectuée lorsque le signal de cofreinage croît plus rapidement qu'avec une vitesse de croissance maximale prédéterminée.

10. Procédé selon l'une des revendications 7 à 9,
caractérisé
par le fait que la valeur prédéterminée, de laquelle la relation entre la pression de freinage dans l'autre véhicule individuel et le signal de cofreinage est modifiée, dépend de la grandeur, constatée lors de l'actionnement précédent des freins, de l'écart entre le choc d'impact et sa plage de tolérance prédéterminée.

11. Procédé selon l'une des revendications 7 à 10,
caractérisé
par le fait que la valeur prédéterminée, de laquelle la relation de la pression de freinage dans l'autre véhicule individuel au signal de cofreinage est modifiée, dépend de la vitesse de croissance du signal de cofreinage.

12. Procédé selon l'une des revendications 7 à 11,
caractérisé
par le fait que la modification de ladite valeur prédéterminée, de la relation entre la pression de freinage dans l'autre véhicule individuel et le signal de cofreinage, est maintenue pendant un temps prédéterminé après la phase non stationnaire de l'actionnement des freins.

13. Procédé selon l'une des revendications précédentes, caractérisé par le fait que le premier véhicule individuel considéré est un véhicule automobile et l'autre véhicule individuel est une remorque tractée par ce véhicule automobile.

14. Dispositif de mise en oeuvre du procédé selon revendication 1, caractérisé par les caractéristiques :
a) il est prévu un dispositif dynamométrique (12) convertissant le choc d'impact en un signal électrique de force;
b) il est prévu un dispositif de traitement de signal (vanne de commande de remorque (10; 37) au moins co-commandable électriquement, émettant le signal de cofreinage;
c) il est prévu une électronique de commande (8; 36) recevant un signal d'activation caractérisant le début d'une phase non stationnaire de l'actionnement des freins et recevant le signal de force et délivrant, dans le cas où le signal d'activation est présent, un signal de commande pour le dispositif de traitement de signal (vanne de commande de remorque 10; 37);
d) l'électronique de commande (8; 36) est constituée de manière telle que, lorsque le signal d'activation est présent, elle compare le signal de force avec la plage de tolérance prédéterminée mémorisée et, en cas de dépassement de ladite plage de tolérance, dose, lors du prochain actionnement de freins, le signal de commande de manière que le dispositif de traitement de signal (vanne de commande de remorque 10; 37) soit commandé pour modifier, de ladite valeur prédéterminée, le signal de cofreinage.

15. Dispositif selon revendication 14, caractérisé par le fait qu'il est prévu une électronique d'activation (4, 5, 6; 5, 36) lisant et mesurant la vitesse de croissance du signal de demande de force de freinage et, au-dessus d'une vitesse de croissance minimale prédéterminée, délivrant ledit signal d'activation.

16. Dispositif selon revendication 15,
caractérisé par les caractéristiques :
a) l'électronique d'activation (4, 5, 6; 5, 36) est conçue-réalisée de façon que l'intensité du signal d'activation dépende de la vitesse de croissance du signal de force de freinage;
b) l'électronique de commande (8; 36) est conçue-réalisée de manière à comparer le signal d'activation avec une valeur maximale mémorisée et à ne pas délivrer le signal de commande en cas d'égalité ou en cas de dépassement de la valeur maximale par le signal d'activation.

17. Dispositif selon l'une des revendications 14 à 16,
caractérisé
par le fait que l'électronique de commande (8; 36) est conçue-réalisée de manière à adapter l'intensité du signal de commande à la grandeur de l'écart, constaté lors de l'actionnement précédent des freins, entre le signal de force et sa plage de tolérance prédéterminée.

18. Dispositif selon l'une des revendications 15 à 17,
caractérisé par les caractéristiques :
a) l'électronique de commande (4, 5, 6; 5, 36) est conçue-réalisée de manière que l'intensité du signal d'activation dépende de la vitesse de croissance du signal de force de freinage;
b) l'électronique de commande (8; 36) est conçue-réalisée de manière que l'intensité du signal de commande soit dépendante de l'intensité du signal d'activation.

19. Dispositif selon l'une des revendications 14 à 18,
caractérisé
par le fait que l'électronique de commande (8; 36) comporte un élément de temporisation à l'aide duquel elle maintient, pendant le temps prédéterminé, le signal de commande après la chute du signal d'activation.

20. Dispositif selon l'une des revendications 15 à 19, dans lequel le signal de demande de force de freinage est constitué par une pression dans le premier véhicule individuel,
caractérisé
par le fait que l'électronique d'activation (4, 5, 6; 5, 36) est constituée par au moins un capteur de pression (4, 5) convertissant ladite pression en un signal électrique de pression et par un dispositif différentiateur (6; 36) différentiant par rapport au temps ce signal de pression.

21. Dispositif de mise en oeuvre du procédé selon revendication 7,
caractérisé par les caractéristiques :
a) il est prévu un dispositif (12) de mesure de force convertissant le choc d'impact en un signal électrique de force;
b) il est prévu un dispositif de traitement de signal (vanne de freinage de remorque 43) pouvant être commandé par le signal de cofreinage et pouvant être au moins co-commandé électriquement;
c) il est prévu une électronique de commande (41) recevant un signal d'activation caractérisant le début d'une phase de freinage non stationnaire lors de l'actionnement des freins et recevant le signal de force, et délivrant, lorsque le signal d'activation est présent, un signal de commande pour le dispositif de traitement de signal (vanne de freinage de remorque 43);
d) l'électronique de commande (41) est conçue-réalisée de manière que, lorsque le signal d'activation est présent, elle compare le signal de force avec la plage de tolérance prédéterminée mémorisée et, en cas de dépassement de celle-ci, dose le signal de commande lors du prochain actionnement des freins, de manière que le dispositif de traitement de signal (vanne 43 de freins de remorque) soit commandé pour modifier, de la valeur prédéterminée, la pression de freinage dans l'autre véhicule individuel, par rapport à la pression de freinage déterminée par le signal de cofreinage dans l'autre véhicule individuel.

22. Dispositif selon revendication 21, caractérisé par le fait qu'il est prévu une électronique d'activation (5, 40) captant et mesurant la vitesse de croissance du signal de cofreinage et, au-dessus d'une valeur minimale de croissance prédéterminée, délivrant le signal d'activation.

23. Dispositif selon revendication 22,
caractérisé par les caractéristiques :
a) l'électronique d'activation (5, 40) est conçue-réalisée de manière que l'intensité du signal d'activation soit dépendante de la vitesse de croissance du signal de cofreinage;
b) l'électronique de commande (41) st conçue-réalisée de manière à comparer le signal d'activation avec une valeur maximale mémorisée et ne délivre pas le signal de commande en cas d'égalité ainsi que dans le cas où le signal d'activation dépasse la valeur maximale.

24. Dispositif selon l'une des revendications 21 à 23,
caractérisé
par le fait que l'électronique de commande (41) est conçue-réalisée de manière à adapter l'intensité du signal de commande à la grandeur de l'écart entre le signal de force et sa plage de tolérance prédéterminée, constaté lors de l'actionnement précédent des freins.

25. Dispositif selon l'une des revendications 21 à 24,
caractérisé par les caractéristiques :
a) l'électronique d'activation (5, 40) est conçue-réalisée de manière que l'intensité du signal d'activation soit dépendante de la vitesse de croissance du signal de cofreinage;
b) l'électronique de commande (41) est conçue-réalisée de manière que l'intensité du signal de commande soit dépendante de l'intensité du signal d'activation.

26. Dispositif selon l'une des revendications 21 à 25,
caractérisé
par le fait que l'électronique de commande (41) contient un élément de temporisation à l'aide duquel le signal de commande est maintenu pendant le temps prédéterminé, après la chute du signal d'activation.

27. Dispositif selon l'une des revendications 21 à 26, dans lequel le signal de cofreinage est une pression de commande de remorque,
caractérisé
par le fait que l'électronique d'activation (5, 40) est constituée par un capteur de pression (5) convertissant la pression de commande de remorque en un signal électrique de pression, et par un dispositif différentiateur (40) différentiant ce signal de pression par rapport au temps.

28. Dispositif selon l'une des revendications 14 à 27,
caractérisé
par le fait que l'électronique d'activation (4, 5, 6; 5, 36; 5, 40) et l'électronique de commande (8; 36; 41) sont réunies, au moins partiellement, matériellement et/ou fonctionnellement.

29. Dispositif selon l'une des revendications 14 à 28, dans lequel les véhicules individuels sont assemblés par un accouplement (13) recevant le choc d'impact,
caractérisé
par le fait que le dispositif de mesure de force (12) est disposé sur l'accouplement (13).

30. Dispositif selon l'une des revendications 14 à 29,
caractérisé
par le fait que l'électronique de commande (6; 36) et/ou l'électronique d'activation (4, 5, 6; 5, 36) et/ou le dispositif de mesure de force (12) et le dispositif de traitement de signal (vanne de commande de remorque 10; 37) sont disposés dans un véhicule individuel.

31. Dispositif selon l'une des revendications 22 à 29,
caractérisé
pai le fait que l'électronique de commande (41), l'électronique d'activation (5, 40), le dispositif de mesure de force (12) et le dispositif de traitement de signal (vanne de freinage de remorque 43) sont disposés dans l'autre véhicule individuel.
